# EUROPEAN PATENT SPECIFICATION

(11) **EP 2 825 021 B1**
(45) Date of publication and mention of the grant of the patent: **11.05.2016**
(21) Application number: 13720072.1
(22) Date of filing: 13.03.2013
(51) Int. Cl.: A01G 9/24

(54) **GREENHOUSE AND SYSTEM FOR GENERATING ELECTRICAL ENERGY AND GREENHOUSE CULTIVATION**
GEWÄCHSHAUS UND SYSTEM ZUR ERZEUGUNG VON ELEKTRISCHER ENERGIE UND GEWÄCHSHAUSANBAU
SERRE ET SYSTÈME POUR GÉNÉRER DE L'ÉNERGIE ÉLECTRIQUE ET CULTURE EN SERRE

(30) Priority: 15.03.2012 IT FI20120056
(43) Date of publication of application: 21.01.2015
(73) Proprietor: Artigianfer di Virgilio Cardelli S.r.l., 51010 S.Lucia Uzzanese (PT) (IT)
(72) Inventor: CARDELLI, Massimo, I-51010 S.Lucia Uzzanese (PT) (IT)
(74) Representative: Mannucci, Michele
(86) International application number: PCT/IB2013/051982
(87) International publication number: WO 2013/136276

(56) References cited:
- EP-A1- 1 616 480
- EP-A1- 2 401 909
- WO-A1-2012/003604
- US-A- 5 655 335
- US-A1- 2010 000 165
- US-A1- 2011 214 364

## Description

### Technical field

The present invention relates to the field of manufacturing greenhouses for cultivation and more in particular the subject matter of the invention relates both to a greenhouse capable of generating electrical energy, and to a system for generating electrical energy and greenhouse cultivation.

### Background art

As it is known, greenhouse cultivation has been used for hundreds of years. Currently, the more common types of greenhouses are formed by buildings whose roofs have sheets of glass, sheets made of plastic material or coverings made of a film of plastic material, naturally all capable of allowing sunlight to pass through.

Greenhouses can have a single bay, that is, a single central space comprised between the lateral columns (generally metal trusses) supporting the structure of the roof, or multiple bays next to each other, wherein two adjacent bays have common lateral supporting columns on one side.

The roof of a bay can be formed of inclined flat pitches opposite relative to the ridge of the roof, generally made of sheets of glass or plastic material, or also of barrel-vaulted corrugated structures, typically made of films of plastic material. A bay can comprise a single ridge with only two opposite inclined pitches (or a single barrel vault) or multiple ridges aligned parallel to each other.

To allow aeration of the greenhouse from above, some types have pitches with portions thereof pivoting between a closed position and an open position.

In recent years, in view of the fact that greenhouses are erected in areas with climates subject to constant exposure to the sun, photovoltaic modules (or panels) have been associated with greenhouses, so as to generate electrical current both for the greenhouse's own use, and to produce a surplus to be conveyed toward other users.

A configuration of greenhouse with photovoltaic modules comprises pitched roofs in which one pitch is openable for aeration of the greenhouse, while the inclined pitch opposite relative to the ridge of the roof is fixed and carries the photovoltaic modules.

In order to optimize the output of the photovoltaic panels, these greenhouses are positioned with the development axis of the bay aligned on the east-west axis, with the inclined pitches carrying the photovoltaic modules, which are thus south facing. Modules with different orientation would have an unacceptable output.

Nevertheless, this configuration of greenhouse poses problems in terms of cultivation yield. In fact, the particular orientation of the greenhouse and the presence of the photovoltaic modules create substantial areas of shade inside the greenhouse which are mainly concentrated on a given portion of the covered area; in this area cultivation can pose actual difficulties according to the type of crop and the place in which the greenhouse is erected. Naturally, shade varies according to season.

Moreover, from the point of view of design, in the case of greenhouses with multiple bays or multiple ridges, opening of pivoting ports on pitches opposite relative to those with photovoltaic modules would be limited, as a position with wide opening would create, at certain times of the day, shadows on the photovoltaic modules of an adjacent ridge, lowering their output.

An example of greenhouse with photovoltaic panels on the roof is described, for example, in WO/2012003604. However, this greenhouse is for cultivations that prevalently require shade, so that the roof is made of pivoting photovoltaic panels that do not allow light to pass through, except when the panels are inclined, or only on one side of the greenhouse. It is evident that this example is not particularly suitable for crop systems that require wide and constant illumination through the roof, like the majority of greenhouse crops. Moreover, as the photovoltaic panels are on a same side of the pitch of the roof, their arrangement is such that when the same panels are inclined, they shade one another, considerably reducing the output of electrical energy generated.

Further, the roof is not rainproof, so that when it rains, water can penetrate inside, even if the roof is in the closed configuration.

Moreover, this greenhouse is configured to be arranged so that the rotation axis of the panels develops according to a north-south direction, while the longitudinal development of the greenhouse is east-west, which is not optimal for cultivation.

Another example of greenhouse with photovoltaic panels is disclosed in EP2401909. Here the panels are static and there is no optimization between light for the greenhouse and light for the photovoltaic panels.

Another example of a building with photovoltaic panels on the walls is disclosed in US 2011/214364. However, this building is not optimal for greenhouse cultivation. An Example of a Greenhouse with photovoltaic panels is also known from document U5-A-5655335.

### Object and summary of the invention

The aim of the present invention is that of solving the drawbacks associated with prior art greenhouses that use photovoltaic modules.

Within the aim set forth hereunder, an important object of the present invention is that of providing a greenhouse with photovoltaic modules that is capable of optimizing the output of the photovoltaic modules and the yield of the cultivation of the greenhouse.

These and other objects, which will be more apparent hereunder, are achieved with a greenhouse according to the appended claim 1 and with a system for generating electrical energy and greenhouse cultivation as claimed in claim 13.

### Brief description of the drawings

Further features and advantages of the invention will be more evident from the description of a preferred but not exclusive embodiment thereof, illustrated by way of non-limiting example in the accompanying drawings, wherein
Fig. 1 represents a schematic front, or cross-sectional, view of a greenhouse according to the invention;
Fig. 2 represents a schematic cross-sectional view of a greenhouse with two bays according to the invention;
Fig. 3 shows a schematic cross-sectional view of a greenhouse with two bays according to the invention, at different times of day.

### Detailed description of an embodiment of the invention

With reference to the aforesaid figures, an example of greenhouse with one bay according to the invention is indicated as a whole with the number 10. It has a support structure 11 for a pitched roof. The structure of the roof comprises a framework 12 that supports two inclined pitches 13 (to facilitate the description, one of the two pitches and the elements corresponding thereto will at times be indicated with a prime symbol when it is useful to distinguish the two pitches in an evident way), opposite relative to the longitudinal ridge of the roof 14.

In this example, the two opposite pitches 13 (13') have, in the respective areas next to the ridge of the roof 14, that is the highest areas of the pitches, two respective openable portions 13A (13A') for allowing aeration of the greenhouse (in practice, in the case of inclined pitches, ridge is intended as the axis or the axial area formed by the two opposite inclined pitches and in which both these pitches terminate). In particular, these portions are pivoting relative to respective hinge axes X (X') parallel to the longitudinal development of the ridge of the roof, and are preferably hinged on one side thereof. In practice, these portions 13A are two opposite aeration ports that have the same longitudinal position along the ridge of the roof.

It must be noted that only the front, or cross-sectional, view of the greenhouse is shown in the figures, while the longitudinal development thereof is not visible. It is evident that this development can have the most suitable length according to the quantity of ground that must be covered for cultivation. The pivoting portions 13A shown in the figure are two, that is, those opposite visible in the front view; it is understood that along the longitudinal development of the roof, on each pitch, a plurality of openable portions will preferably be provided, aligned longitudinally with each other (arranged contiguously to each other or spaced apart from each other along the longitudinal development, according to need).

The respective lower portions 13B (13B') of the inclined pitches 13 are fixed to the structure of the roof 12. Therefore, on one pitch of the roof, starting from the ridge 14 and moving downward (with reference to a same cross section of the greenhouse), there will firstly be a pivoting portion or port 13A, openable from a closed position to a maximum opening position for allowing aeration of the greenhouse, and then a fixed portion 13B.

According to the invention, on the pivoting portion 13A (13A') there is mounted a photovoltaic module or panel 15 (15') (or several modules, according to dimensions and types) operatively connected with respective electrical energy management means (such as inverters etc., not shown in the figures). The fixed portion 13B of the pitch 13 is instead in a material which allows sunlight to pass through, according to the typical function of the greenhouse and comprises, for example, a sheet (or several sheets) of glass or of plastic material (although other materials or supports are also possible).

The roof, when the pivoting ports 13A are closed, is substantially rainproof, i.e. between the various portions of the roof seals and/or rainwater drainage and/or collection channels are provided.

The rotating movement of the pivoting portions 13A of the roof takes place, for example, through automatic means 16 (16'), that is, suitable actuators such as an electric motor fixed to the structure of the roof and associated with a rack and pinion or lead screw and nut system 16B (16B') and in which, for example, one end of the rack or of the lead screw is operatively connected, for example through a suitable joint, to the pivoting portion 13A.

The greenhouse is therefore provided with photovoltaic modules 15 that move with the aeration ports of the roof 13A. In this example the photovoltaic modules are fixed to the pivoting portions 13A. In other embodiments, they can either be integrated therein or can form a separate structure thereto. It would also be possible to use photovoltaic modules of the type that allows light to pass through (photovoltaic glass) that form the sheets of the pivoting ports.

The ports 13A, and therefore the photovoltaic modules 15, can be moved to track the movement of the sun during the day, thus maintaining, when required, the best inclination in relation to the sun's rays for maximizing the conversion of solar energy into electrical energy and, at the same time, for allowing aeration of the greenhouse. The pivoting ports are therefore actual "solar trackers".

The greenhouse is provided with an electronic system 17 for managing the movement of the pivoting portions 13A of roof provided with photovoltaic modules 15; this electronic system for managing the movement provides for the assessment of at least one of the environmental and/or temporal and/or geographical parameters, and therefore the greenhouse comprises respective means for detection of the parameters (temperature sensors, humidity sensors, etc., of know type) comprised within the following group: wind speed, wind direction, presence of rain, temperature inside the greenhouse, temperature outside the greenhouse, humidity inside the greenhouse, humidity outside the greenhouse, date, time, temperature measured on the surface of the photovoltaic module, external irradiance, greenhouse axis orientation, greenhouse latitude, greenhouse longitude.

One or more of the following sensor means will, for example, be present: greenhouse internal humidity sensor 17A, greenhouse internal temperature sensor 17B, greenhouse external temperature sensor 17D, greenhouse external humidity sensor 17E, rain sensor 17F.

Operation of the system can take place according to manual or automatic mode.

Manual operation provides for actuation of the movement means when required. In this case, the movements of the modules/ports can be implemented from a control panel 17G available to the operator regardless of the position of the sun in the sky.

Automatic operation provides for adjustment of the inclination of the photovoltaic ports- modules 13A-15 to take place considering the position of the sun in the sky, for example through the implementation of an algorithm based on calculating the solar angle at the latitude and longitude of the place in which the greenhouse is erected and, naturally, the date and time (astronomical clock), as well as the orientation of the greenhouse. These data can be set by the operator in the management system, for example through a control panel 18 or PC interface, which can optionally be remote.

Advantageously, automatic operation provides for movement of the photovoltaic ports-modules 13A-15 on the basis of the combination of one or more of the parameters indicated above. For example, the ports-modules 13A-15 are rotated on the basis of the orientation of the sun as explained above, but in combination with detection of the rate of humidity or of temperature present in the greenhouse. Let us consider, for example, the case in which optimum environmental conditions for the crop are preferred over optimal solar irradiance on the photovoltaic modules. In this case, if an excessive rate of humidity or an excessive temperature is detected inside the greenhouse, it will be necessary to increase the inclination of the ports to promote aeration inside the greenhouse even if these were inclined optimally with regard to photovoltaic output.

As stated, the environmental parameters can also include the temperature and humidity outside the greenhouse.

The presence of the wind sensors (intensity and direction) 17C is particularly advantageous, as it allows the inclination of the ports/modules 13A-15 to change on the basis of preset threshold values, thus preventing problems of excessive loads applied to the same ports by the force of the wind. The wind speed detection sensor means are therefore suitable means that guarantee greater safety of the greenhouse as well as a longer working life and less frequent extraordinary maintenance operations. It is understood that the direction and the quantity of wind can, in some modes of implementation of the system management algorithm 17, also be used to calculate the quantity of air required to change the air in the greenhouses, if there is too much humidity.

The presence of rain sensors 17F allows closing of the ports if it is necessary to protect the crops. In general, the advantageous operating logic of the electronic system for managing the movement of the photovoltaic ports/modules provides for setting the geographic position of the greenhouse (longitude, latitude, orientation of the greenhouse longitudinal axis) and setting the temperature and humidity requirements inside the greenhouse (optionally also correlated to the time of day and to the period of the year); therefore, at least the temperature and humidity inside the greenhouse are detected during operation of the greenhouse and comparison between the parameters detected and the relative parameters set takes place, and a request for the positions of the two ports/modules of the opposite pitches is defined based on such comparison; there is a check of the astronomical clock (that is, of the sun's position at that day and time) and a request for an optimal position for the photovoltaic ports-modules is defined based on the astronomical clock; the intensity and speed of the wind and the presence of any rain is verified, and a request for particular positioning of the ports is optionally defined, for example closing in the case of rain or lowering in the case of wind; based on all the aforesaid requests, the electronic system processes the desired position of the panels based on a program implemented in the system and sends commands to the actuators for moving the two photovoltaic ports-modules 13A-15 and 13A'-15' of the two opposite pitches.

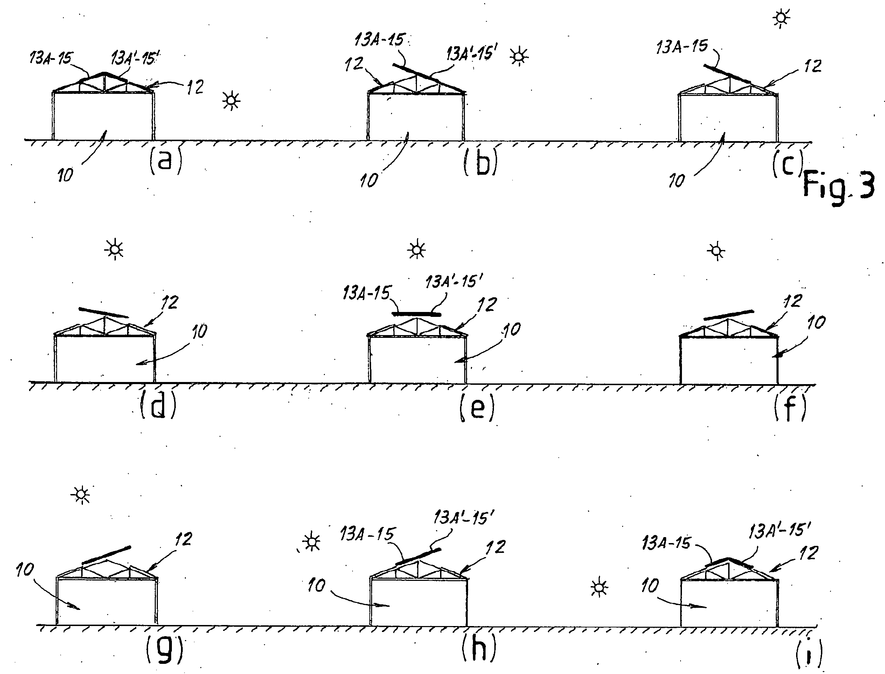

Advantageously, the two ports-modules 13A-15 and 13A'-15' relating to the same ridge 14 of the roof 13 will move, for at least one portion of their path, preferably synchronously, remaining more or less parallel with each other to allow the sun's rays to strike the modules with the same optimal or desired inclination. This is obviously not the case during the initial step in which the ports are both closed on the roof and for times of day (sunrise and sunset) in which the sun's rays are very low, times at which the ports can both remain closed). Therefore, preferably, each photovoltaic port-module 13A-15 is moved between two positions, a position in which it is closed and a second position in which it is open and inclined parallel to the other port-module 13A'-15' of the ridge (that is, the one arranged in front according to a direction orthogonal to the longitudinal development of the greenhouse) in closed position, i.e. parallel to the other pitch of the roof. Operation as solar tracker is shown, for example, in Fig. 3.

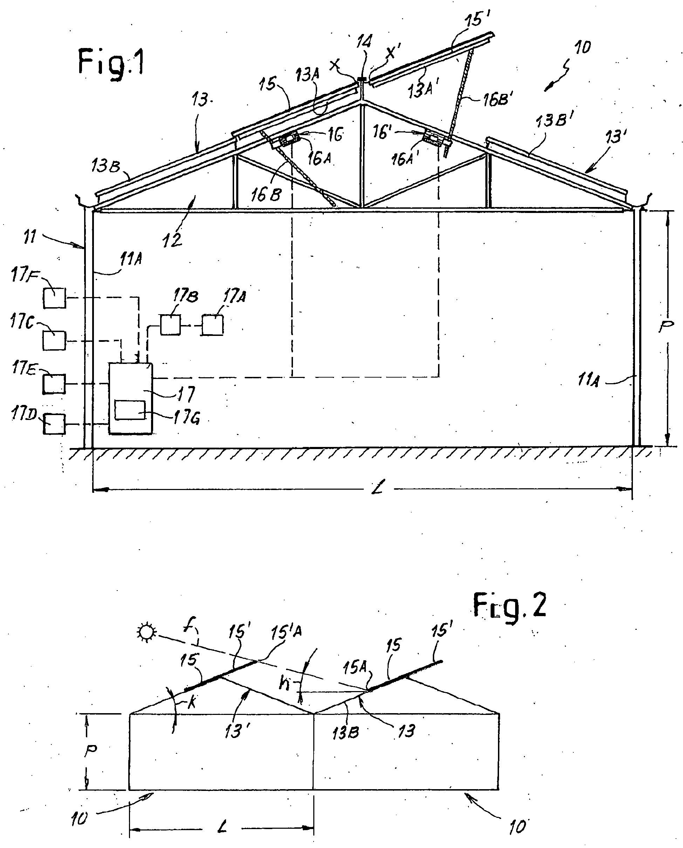

The example of Fig. 1 relates to a greenhouse with a single bay. Fig. 2 shows the case of a greenhouse with two bays, in practice two bays as in Fig. 1 next to each other, with common lateral supporting columns of the roof structure along the common side. In general, the invention also provides for the case of greenhouses with multiple bays.

In the examples indicated, the pivoting ports with the photovoltaic modules have been positioned close to the ridge of the roof. In other embodiments, these pivoting portions with modules can be located in other positions of the roof. Again according to the invention, the bay or bays can have a single ridge or multiple ridges according to need, without however departing from the inventive concept. Further, also the shape of the roof can differ from that with flat inclined pitches, for example the roof (or a portion thereof) could be of the type with barrel vaults and the pivoting portion carrying the photovoltaic module could be curved.

Advantageously, due to the use of the aeration ports as solar trackers on which to arrange (or integrate) the photovoltaic modules, the greenhouse can be arranged with orientation (that is with development axis of the bays) in north-south direction, an orientation that is particularly advantageous from the point of view of cultivation. In fact, with this orientation, the photovoltaic modules are not oriented in the conventional optimal manner, but the fact that they can be moved to track the sun allows the energy difference compared to conventional orientation to be recovered and even exceeded. Therefore, with this configuration, an improved cultivation effect and an improved or equivalent output in the generation of electrical energy are obtained. Therefore, the invention also relates to a system for generating electrical energy and greenhouse cultivation, which comprises a greenhouse with pivoting ports wherein the photovoltaic modules are integrated and wherein the axis of the greenhouse is substantially directed according to the south-north direction.

In the case of bays with opposite flat inclined pitches relative to the ridge of the roof (or with multiple ridges), the fact of using pivoting ports with integrated photovoltaic modules on the highest portions of the pitches of the roof ensures that the shade of the photovoltaic modules on the roof of the contiguous bay is extremely limited. This result is preferably reached with an inclination of the pitches in the range between 14° and 30° relative to the horizontal and more preferably in the range between 20° and 25°. Even more preferably, the inclination of the pitches is equal to about 22°, as shown in Fig. 2 (angle k); in this regard, again in this figure it can be seen that the angle h between the horizontal and the straight line that joins the upper edge 15'A of a port/module 15' in the maximum opening position (in relation to solar irradiance) and the lower edge 15A of the port/module 15 of a contiguous pitch 13 of an adjacent bay 100, in closed position, and preferably equal to about 15°. This straight line f in practice indicates the maximum shade produced by a port/module in the maximum opening position on the pitch portion 13B that allows light to pass through. The limit of 15° is particularly advantageous, in practice the maximum shade is only present at sunset (case shown in Fig. 2, sun setting in the west) and sunrise (case with sun in the symmetrically, opposite position, sun rising in the east) when the greenhouse is arranged with longitudinal axis (that is, with reference to the figures, orthogonal to the plane of the sheet with the figures, i.e. parallel to the development of the ridge of the roof) oriented according to the north-south direction. Naturally, variations of this north-south orientation in the range of around 30° are considered to fall within the case of north-south orientation.

According to an embodiment, provided purely by way of non-limiting example of the invention, the ratio between height "P" of the lateral columns 11A of a bay and width "L" of the same bay is advantageously in the range between 0.3 and 0.5 and more preferably equal to about 0.42. However, it must be understood that the invention can also be applied to greenhouses with different shape ratios to those indicated.

Fig. 3 shows the case of a greenhouse with a single bay (although the concept is analogous to the multiple bay) with greenhouse axis oriented according to the north-south direction, with the photovoltaic ports-modules 13A-15 that move to track the sun. Fig. 3a shows the case of the period of the night just after sunrise, in which the ports 13A are in closed position (the sun's rays are absent or very low, less than 15° on the horizontal), as there is no advantage in keeping the two ports-modules parallel to each other as the incidence of the rays is minimum and it is preferable to maintain a certain climate inside the greenhouse (it is understood that, if it is necessary to change the parameters of the climate in the greenhouse, the ports-modules can also be opened in this step); Fig. 3b shows the case of early morning after sunrise (incidence of the sun's rays greater than 15°), in which there is maximum opening of the ports-modules 13A-15 (with the corresponding opposite ports-modules 13A'-15A' of the opposite pitch still closed), and then a coordinated movement of both ports-modules 13A-15 and 13A'-15, remaining substantially parallel or aligned with each other to track the rising of the sun to the maximum point of solar elevation (Fig. 3e) and then, consequently descent of the sun until sunset (Fig. 3h) in which there is maximum opening of the ports-modules 13A'-15' (with the corresponding opposite ports-modules 13A-15A of the opposite pitch still closed), to then close completely during sunset and throughout the night (Fig. 3i), the same as the situation of Fig. 3a.

It is understood that the above only represents possible non-limiting embodiments of the invention, which can vary in forms and arrangements without departing from the scope of the concept underlying the invention. Any reference numerals in the appended claims are provided purely for the purpose of facilitating the reading thereof in the light of the description above and of the accompanying drawings, and do not in any way limit the scope of protection.

## Claims

1. Greenhouse comprising
- a single bay or multiple bays next to each other; the or each bay having a a roof (12, 13), of the type with ridge substantially parallel to the longitudinal development of the greenhouse and opposite inclined pitches (13), through which sunlight can at least partly pass for allowing cultivation underneath,
- at least two openable portions (13A) of the said roof for allowing aeration of the greenhouse, arranged close to the ridge (14) of the roof, arranged opposite and along the same longitudinal position relative to the ridge (14) of the roof, said at least two openable portions (13A) of roof being adapted to rotate around an axis (X) substantially parallel to the development of the ridge of the roof of the greenhouse in relation to one side of the respective portion of roof, such that they are pivoting from a closed position to a maximum opening position, **characterised in that**,
- for each pitch of the roof, a fixed portion, arranged lower and contiguous to a respective said pivoting portion (13A) along the same longitudinal position relative to the ridge (14) of the roof, said fixed portion being made of a material through which sunlight can pass, and
- at least two photovoltaic modules (15), each fixed to, or forming part of, a respective said pivoting portion of roof (13A), so that said pivoting portions of roof (13A) with said respective photovoltaic modules (15) being part of respective inclined pitches (13) of the roof (12, 13) and being close to the ridge (14) of the roof; when the inclination of said pivoting portions (13A) change, said respective photovoltaic modules (15) follow the movement of the pivoting portion (13A), wherein, for at least a part of the movement thereof, said two pivoting portions (13A, 13A') carrying respective photovoltaic modules (15, 15') are substantially parallel and/or aligned with each other..

2. Greenhouse according to claim 1, wherein, for at least a part of the movement thereof, said two pivoting portions (13A, 13A') carrying respective photovoltaic modules (15, 15') are substantially parallel and/or aligned with each other.

3. Greenhouse according to one or more of the previous claims, wherein said pitches of the roof are substantially flat.

4. Greenhouse according to claim 3, wherein said opposite flat pitches have an inclination in the range between 14° and 30° relative to the horizontal and more preferably in the range between 20° and 25°, and even more preferably with an inclination of the pitches equal to about 22°.

5. Greenhouse according to one or more of the previous claims, wherein said at least one photovoltaic module (15) is arranged on said roof.

6. Greenhouse according to one or more of the previous claims, wherein said roof, when said at least one pivoting portion (13A) is closed, is substantially rainproof.

7. Greenhouse according to one or more of the previous claims, comprising automatic opening means (16) for said at least one portion (13A) of roof with at least one photovoltaic module (15).

8. Greenhouse according to claim 7, comprising an electronic system (17) for managing the movement of said at least one portion of roof with at least one photovoltaic module; said electronic movement management system comprising the assessment of at least one of the environmental and/or temporal and/or geographical parameters comprised within the following group: wind speed, wind direction, presence of rain, temperature inside the greenhouse, temperature outside the greenhouse, humidity inside the greenhouse, humidity outside the greenhouse, date, time, temperature measured on the surface of the photovoltaic module, external irradiance, greenhouse axis orientation, greenhouse latitude, greenhouse longitude; said electronic management system (17) being operatively connected with said automatic opening means (16) for allowing the positioning of said at least one portion (13A) of roof with at least one photovoltaic module (15) based on priorities scheduled within the same system by a programmer/user which take into account at least one of said environmental and/or temporal and/or geographical parameters.

9. Greenhouse according claim 8, comprising one or more of the following sensors: greenhouse internal humidity sensor (17A), greenhouse internal temperature sensor (17B), greenhouse external temperature sensor (17D), greenhouse external humidity sensor (17E), rain sensor (17F).

10. Greenhouse according to claims 8 or 9, comprising at least one greenhouse external wind speed sensor (17C).

11. Greenhouse according to claim 8, 9 or 10, wherein said electronic system (17) for managing the movement of the photovoltaic ports/modules provides for setting the geographical position of the greenhouse (that is, longitude, latitude, orientation of the greenhouse longitudinal axis) and setting the temperature and humidity requirements inside the greenhouse, optionally also correlated to the time of day and to the period of the year; at least the temperature and humidity inside the greenhouse being detected during operation of the greenhouse and comparison between the parameters detected and the relative parameters set taking place, and a request for the position of said at least one pivoting portion with photovoltaic module being defined based on such comparison; said system providing for a check of the astronomical clock, that is, of the sun's position at a given day and time, and a definition of a request for optimal position for said at least one pivoting portion with photovoltaic module based on the astronomical clock; said system checking the wind speed and the presence of any rain with optional definition of a request for particular positioning of said at least one pivoting portion with photovoltaic module; based on all of said requests, the electronic system processing the desired position of said at least one pivoting portion with photovoltaic module based on a program implemented in the system and sending commands to the actuators for moving said at least one pivoting portion with photovoltaic module.

12. System for generating electrical energy and greenhouse cultivation, **characterized in that** it comprises a greenhouse according to one or more of the previous claims, wherein the development axis of such greenhouse is substantially directed according to the south-north direction.

13. System for generating electrical energy and greenhouse cultivation according to claim 12, wherein the rotation axis (X) of said at least one pivoting part of roof is parallel to the longitudinal development of the greenhouse.

## Patentansprüche

1. Gewächshaus mit
einem einzelnen Abschnitt oder mehreren Abschnitten nebeneinander, wobei der oder jeder Abschnitt ein Dach (12, 13) der Bauart mit einem First im Wesentlichen parallel zu der Längserstreckung des Gewächshauses und entgegengesetzt geneigten Schrägen (13) aufweist, durch die Sonnenlicht zumindest teilweise für einen Pflanzenanbau darunter durchtreten kann,
zumindest zwei zu öffnende Bereiche (13A) zur Ermöglichung der Belüftung des Gewächshauses, die nahe des Firsts (14) des Dachs angeordnet sind, die gegenüberliegend und entlang der selben Längsposition relativ zu dem First (14) des Dachs angeordnet sind, wobei die zumindest zwei zu öffnenden Bereiche (13A) des Daches ausgebildet sind, um eine Achse (X) drehen zu können, die im Wesentlichen parallel zu der Erstreckung des Firsts des Daches des Gewächshauses in Bezug auf eine Seite des jeweiligen Bereichs des Daches ist, so das sie von einer geschlossenen Position in eine maximale geöffnete Position schwenken, **gekennzeichnet durch** für jede Schräge des Daches einen festen Bereich, der tiefer und angrenzend an einen jeweiligen Schwenkbereich (13A) entlang der selben Längsposition relativ zu dem First (14) des Dachs angeordnet ist, wobei der feste Bereich aus einem Material gefertigt ist, **durch** das Licht dringen kann, und zumindest zwei Fotovoltaikmodule (15), von denen jedes an einem jeweiligen Schwenkbereich des Daches (13A) befestigt ist oder einen Teil davon bildet, sodass die Schwenkbereiche des Daches (13A) mit den jeweiligen Fotovoltaikmodulen (15) einen Teil der jeweiligen geneigten Schrägen (13) des Daches (12, 13) bilden und nahe des Firsts (14) des Daches sind, wobei, wenn sich die Neigung der Schwenkbereiche (13A) ändert, die jeweiligen Fotovoltaikmodule (15) der Bewegung des Schwenkbereichs (13A) folgen, wobei für zumindest einen Teil ihrer Bewegung die beiden Schwenkbereiche (13A, 13A'), die die jeweiligen Fotovoltaikmodule (15, 15') tragen, im Wesentlichen parallel zueinander und/oder zueinander ausgerichtet sind.

2. Gewächshaus nach Anspruch 1, wobei für zumindest einen Teil ihrer Bewegung die beiden Schwenkbereiche (13A, 13A'), die die jeweiligen Fotovoltaikmodule (15, 15') tragen, im Wesentlichen parallel zueinander und/oder zueinander ausgerichtet sind.

3. Gewächshaus nach einem oder mehreren der vorstehenden Ansprüche, wobei die Schrägen des Daches im Wesentlichen flach sind.

4. Gewächshaus nach Anspruch 3, wobei gegenüberliegende flache Schrägen eine Neigung im Bereich zwischen 14° und 30° relativ zu der Horizontalen und weiter vorzuziehen im Bereich zwischen 20° und 25° und insbesondere vorzuziehen mit einer Neigung der Schrägen etwa gleich 22° aufweisen.

5. Gewächshaus nach einem oder mehreren der vorstehenden Ansprüche, wobei das zumindest eine Fotovoltaikmodul (15) auf dem Dach angeordnet ist.

6. Gewächshaus nach einem oder mehreren der vorstehenden Ansprüche, wobei das Dach im Wesentlichen wasserdicht ist, wenn der zumindest eine Schwenkbereich (13A) geschlossen ist.

7. Gewächshaus nach einem oder mehreren der vorstehenden Ansprüche mit einer automatischen Öffnungseinrichtung (16) für den zumindest einen Bereich (13 A) des Dachs mit zumindest einem Fotovoltaikmodul (15).

8. Gewächshaus nach Anspruch 7 mit einem Elektroniksystem (17) zur Steuerung der Bewegung des zumindest einen Bereichs des Dachs mit zumindest einem Fotovoltaikmodul, wobei das elektronische Bewegungssteuersystem die Bewertung von zumindest der Umwelt- und/oder temporären und/oder geographischen Parameter umfasst, die in der folgenden Gruppe enthalten sind: Windgeschwindigkeit, Windrichtung, Vorhandensein von Regen, Temperatur innerhalb des Gewächshauses, Temperatur außerhalb des Gewächshauses, Feuchtigkeit innerhalb des Gewächshauses, Feuchtigkeit außerhalb des Gewächshauses, Datum, Zeit, Temperatur, die auf der Oberfläche des Fotovoltaikmoduls gemessen wird, externe Bestrahlung, Orientierung der Gewächshausachse, Breitengrad des Gewächshauses, Längengrad des Gewächshauses, wobei das elektronische Steuersystem (17) operativ mit der automatischen Öffnungseinrichtung (16) verbunden ist, um die Positionierung des zumindest einen Bereichs (13A) des Daches mit zumindest einem Fotovoltaikmodul (15) basierend auf Prioritäten innerhalb desselben Systems durch einen Programmierer/Benutzer zu erlauben, wobei zumindest einer der Umwelt- und/oder temporären und/oder geographischen Parameter berücksichtigt wird.

9. Gewächshaus nach Anspruch 8 mit einem oder mehreren der folgenden Sensoren: Sensor (17A) für die Feuchtigkeit innerhalb des Gewächshauses, Sensor (17B) für die Temperatur innerhalb des Gewächshauses, Sensor (17D) für die Temperatur außerhalb des Gewächshauses, Sensor (17E) für die Feuchtigkeit außerhalb des Gewächshauses, Regensensor (17F).

10. Gewächshaus nach Anspruch 8 oder 9 mit mindestens einem Sensor (17C) für die Windgeschwindigkeit außerhalb des Gewächshauses.

11. Gewächshaus nach einem der Ansprüche 8, 9 oder 10, wobei das elektronische System (17) zur Steuerung der Bewegung der fotovoltaischen Öffnungen/Module die Einstellung der geographischen Position des Gewächshauses bietet (das heißt Längengrad, Breitengrad, Orientierung der Längsachse des Gewächshauses) und die Einstellung der Temperatur- und Feuchtigkeitsanforderungen innerhalb des Gewächshauses, optional auch korreliert mit der Tageszeit und der Jahreszeit, wobei zumindest die Temperatur und die Feuchtigkeit innerhalb des Gewächshauses während des Betriebs des Gewächshauses erfasst werden und ein Vergleich zwischen den Parametern, die erfasst werden, und den eingestellten relativen Parametern stattfindet, und eine Anforderung für die Position des zumindest einen Schwenkbereichs mit dem Fotovoltaikmodul basierend auf einem solchen Vergleich definiert wird, wobei das System eine Prüfung der astronomischen Uhr bietet, d.h. die Position der Sonne an einem gegebenen Tag und zu einer Zeit und eine Definition einer Anforderung für eine optimale Position des mindestens einen Schwenkbereichs mit dem Fotovoltaikmodul basierend auf der astronomischen Uhr, wobei das System die Windgeschwindigkeit und die Anwesenheit von jedem Regen mit optimaler Definition für eine Anforderung für eine spezielle Positionierung des zumindest einen Schwenkbereichs mit dem Fotovoltaikmodul überprüft, basierend auf allen Anforderungen, wobei das elektronische System die gewünschte Position des zumindest einen Schwenkbereichs mit dem Fotovoltaikmodul basierend auf ein Programm verarbeitet, das in dem System implementiert ist, und Befehle an Betätigungselemente zur Bewegung des zumindest einen Schwenkbereichs mit dem Fotovoltaikmodul sendet.

12. System zur Erzeugung elektrischer Energie und für Gewächshauskultivierung, **dadurch gekennzeichnet, dass** es ein Gewächshaus nach einem der vorstehenden Ansprüche aufweist, wobei die Erstreckungsachse dieses Gewächshauses im Wesentlichen entlang der Süd-Nord-Richtung gerichtet ist.

13. System zur Erzeugung elektrischer Energie und zur Gewächshauskultivierung nach Anspruch 12, wobei die Drehachse (X) des zumindest einen Schwenkteils des Daches parallel zur Längserstreckung des Gewächshauses ist.

## Revendications

1. Serre comprenant
- un unique compartiment ou de multiples compartiments les uns à côtés des autres : le ou chaque compartiment ayant un toit (12, 13) du type ayant des plaques sensiblement parallèles à l'extension longitudinale de la serre et des pans inclinés de manière opposée (13), à travers lesquels la lumière du soleil peut au moins partiellement passer pour permettre une culture en-dessous,
- au moins deux parties ouvrables (13A) dudit toit afin de permettre une aération de la serre, disposées près du sommet (14) du toit, disposées face à face et le long de la même position longitudinale par rapport au sommet (14) du toit, lesdites deux parties ouvrables (13A) du toit étant aptes à pivoter autour d'un axe (X) sensiblement parallèle à l'extension du sommet du toit de la serre par rapport à un côté de la partie correspondante du toit, de sorte qu'elles soient pivotantes d'une position proche à une position d'ouverture maximale, **caractérisée en ce que**
- pour chaque pan du toit, une partie fixe, disposée sous et de manière contigüe à une partie pivotante correspondante (13A) le long de la même position longitudinale par rapport au sommet (14) du toit, ladite partie fixe étant faite d'un matériau au travers duquel la lumière du soleil peut passer, et
- au moins deux modules photovoltaïques (15), chacun étant fixé à, ou faisant partie d'une partie pivotante correspondante de toit (13A), de sorte que lesdites parties pivotantes de toit (13A) avec lesdits modules photovoltaïques correspondants (15) fassent partie des pans inclinés correspondants (13) du toit (12, 13) et soient proches du sommet (14) du toit ; lorsque l'inclinaison desdites parties pivotantes (13A) change, lesdits modules photovoltaïques correspondants (15) suivent le mouvement de la partie pivotante (13A), étant donné qu'au moins sur une partie de leur mouvement, lesdites parties pivotantes (13A, 13A') portant des modules photovoltaïques correspondantes (15, 15') sont sensiblement parallèles et/ou alignées les unes par rapport aux autres.

2. Serre selon la revendication 1, dans laquelle, sur au moins une partie de leur mouvement, lesdites deux parties pivotantes (13A, 13A') portant des modules photovoltaïques correspondants (15, 15') sont sensiblement parallèles et/ou alignées les unes par rapport aux autres.

3. Serre selon une ou plusieurs des revendications précédentes, dans laquelle lesdits pans du toit son sensiblement plats.

4. Serre selon la revendication 3, dans laquelle lesdits pans plats opposés ont une inclinaison dans la plage allant de 14 à 30 degrés par rapport à l'horizontale et plus préférablement dans la plage allant de 20 à 25 degrés et encore plus préférentiellement avec une inclinaison des pans égale à environ 22 degrés.

5. Serre selon une ou plusieurs des revendications précédentes, dans laquelle ledit ou lesdits modules photovoltaïques (15) est/sont agencés sur ledit toit.

6. Serre selon une ou plusieurs des revendications précédentes, dans laquelle ledit toit, lorsqu'au moins une partie pivotante (13A) est fermée, est sensiblement étanche à la pluie.

7. Serre selon une ou plusieurs des revendications précédentes, comprenant des moyens d'ouverture automatique (16) pour ladite ou lesdites parties de toit (13A) avec au moins un module photovoltaïque (15).

8. Serre selon la revendication 7, comprenant un système électronique (17) pour gérer le mouvement de ladite ou desdites parties de toit avec au moins un module photovoltaïque ; ledit système électronique de gestion de mouvement comprenant l'évaluation d'au moins l'un des paramètres environnementaux et/ou temporels et/ou géographiques compris dans le groupe suivant : vitesse du vent, sens du vent, présence de pluie, température à l'intérieur de la serre, température à l'extérieur de la serre, humidité à l'intérieur de la serre, humidité à l'extérieur de la serre, date, heure, température mesurée à la surface du module photovoltaïque, rayonnement externe, orientation de l'axe de la serre, latitude de la serre, longitude de la serre ; ledit système de gestion électronique (17) étant connecté de manière opérationnelle auxdits moyens d'ouverture automatique (16) pour permettre le positionnement d'au moins une partie (13A) du toit avec au moins un module photovoltaïque (15) sur la base de priorités programmées au sein dudit système par un programmeur/utilisateur, qui prennent en compte au moins l'un desdits paramètres environnementaux et/ou temporels et/ou géographiques.

9. Serre selon la revendication 8, comprenant un ou plusieurs des détecteurs suivants : détecteur d'humidité à l'intérieur de la serre (17A), détecteur de température à l'intérieur de la serre (17B), détecteur de température à l'extérieur de la serre (17B), détecteur d'humidité à l'extérieur de la serre (17E), détecteur de pluie (17F).

10. Serre selon la revendication 8 ou 9 comprenant au moins un détecteur de vitesse du vent à l'extérieur de la serre (17C).

11. Serre selon la revendication 8, 9 ou 10, dans lequel ledit système électronique (17) pour gérer le mouvement des modules/ports photovoltaïques réalise le réglage de la position géographique de la serre (c'est-à-dire, la longitude, la latitude, l'orientation de l'axe longitudinal de la serre) et le réglage des conditions de température et d'humidité requises à l'intérieur de la serre, éventuellement de manière également corrélée avec l'heure du jour et la période de l'année ; au moins la température et l'humidité à l'intérieur de la serre étant mesurées durant le fonctionnement de la serre et une comparaison entre les paramètres mesurés et les paramètres requis ayant lieu, et une requête de positionnement de ladite ou desdites parties pivotantes avec un module photovoltaïque étant créée sur la base d'une telle comparaison ; ledit système réalisant une vérification de l'horloge astronomique, c'est-à-dire, de la position du soleil à une heure et un jour donnés, et la création d'une requête de positionnement optimal pour ladite ou lesdites parties pivotantes avec un module photovoltaïque sur la base de l'horloge astronomique ; ledit système vérifiant la vitesse du vent et la présence de pluie avec la création éventuelle d'une requête pour le positionnement particulier de ladite ou desdites parties pivotantes avec un module photovoltaïque ; sur la base de toutes ces requêtes, le système électronique traite la position désirée de ladite ou desdites parties pivotantes avec un module photovoltaïque sur la base d'un programme installé dans le système et envoie des commandes aux organes d'actionnement pour déplacer ladite ou lesdites parties pivotantes avec un module photovoltaïque.

12. Système de génération d'énergie électrique et de culture sous serre, **caractérisé en ce qu'**il comprenant une serre selon une ou plusieurs des revendications précédentes, dans lequel l'axe d'extension de ladite serre est sensiblement orienté suivant la direction sud-nord.

13. Système de génération d'énergie électrique et de culture sous serre selon la revendication 12, dans lequel l'axe de rotation (X) de ladite ou lesdites parties pivotantes de toit est parallèle à l'extension longitudinale de la serre.
